**Europäisches Patentamt**

**European Patent Office**

**Office européen des brevets**

(19)

(11) Veröffentlichungsnummer: **0 127 757**
**B1**

(12)

# EUROPÄISCHE PATENTSCHRIFT

(45) Veröffentlichungstag der Patentschrift:
**09.12.87**

(21) Anmeldenummer: **84104636.0**

(22) Anmeldetag: **25.04.84**

(51) Int. Cl.⁴: **C 08 F 20/12,** C 08 F 2/44

(54) Unvernetzte, füllstoffhaltige Peripolymerisate und Verfahren zu ihrer Herstellung.

(30) Priorität: **07.05.83 DE 3316852**

(43) Veröffentlichungstag der Anmeldung:
**12.12.84 Patentblatt 84/50**

(45) Bekanntmachung des Hinweises auf die Patenterteilung:
**09.12.87 Patentblatt 87/50**

(84) Benannte Vertragsstaaten:
**AT CH DE FR GB IT LI SE**

(56) Entgegenhaltungen:
**EP - A - 0 084 769**
**DE - A - 2 849 936**

(73) Patentinhaber: **BAYER AG, Konzernverwaltung RP Patentabteilung, D-5090 Leverkusen 1 Bayerwerk (DE)**

(72) Erfinder: **Podszun, Wolfgang, Dr., Wolfskaul 4, D-5000 Koeln 80 (DE)**

## Beschreibung

Gegenstand der Erfindung sind unvernetzte, gleichmässig mit anorganischem Füllstoff (vorzugsweise auf Siliziumdioxidbasis) gefüllte Perlpolymerisate mit einer mittleren Teilchengrösse von 5 bis 150 µm.

Die Herstellung von ungefüllten Perlpolymerisaten ist zum Beispiel aus Houben-Weyl, Methoden der Organischen Chemie, Band XIV/1, bekannt. Man dispergiert dazu olefinisch ungesättigte Monomere in Wasser unter Rühren und polymerisiert die gebildeten Tröpfchen mit Hilfe eines monomerlöslichen Initiators.

Um ein Koagulieren des Reaktionsansatzes während der Polymerisation zu verhindern, müssen im allgemeinen Dispergatoren eingesetzt werden; dies sind in der Regel wasserlösliche, hochmolekulare, organische Verbindungen oder feinteilige, wasserunlösliche Verbindungen (zu letzteren gehören z.B. die als Pickering-Dispergatoren bezeichneten Substanzen).

Die Polymerisation von feinteilige, unlösliche, anorganische Füllstoffe enthaltenden Monomeren führt in der Regel nicht zu Perlen, die diese Partikel in über den Querschnitt gleichmässig verteilter Form enthalten, da die anorganischen Partikel als Dispergator wirken und an die Wasser-Monomer-Phasengrenze wandern.

In der US-PS 3 716 505 wird die Suspensionspolymerisation von Mischungen aus Vinylmonomeren, einem im Monomeren löslichen Polymerisat und einer unlöslichen anorganischen Verbindung, wie zum Beispiel Siliziumdioxid, beschrieben. Auch in diesem Falle wirkt die anorganische Verbindung als Dispergator und befindet sich nach der Polymerisation ausschliesslich an der Perlenoberfläche.

Die DE-OS 28 49 936 beschreibt die Herstellung von vernetzten Perlen, die feinteilige Füllstoffe in gleichmässig verteilter Form enthalten. Das Verfahren ist durch die Verwendung von Monomeren oder Monomer-Polymerisat-Mischungen mit einer erhöhten Viskosität (0,1 bis 10 Pa.s, gemessen bei der Dispergiertemperatur) gekennzeichnet.

Für bestimmte Anwendungen, z.B. zur Herstellung von Spritzgussartikeln, sind jedoch vernetzte Perlpolymerisate wegen ihrer Unschmelzbarkeit ungeeignet; für diesen Einsatzzweck werden vielmehr unvernetzte Polymerisate benötigt.

Auch bei einigen Anwendungen auf dem Dentalgebiet besteht ein Bedarf an unvernetzten Perlpolymerisaten, die in Monomeren wie Methylmethacrylat löslich sind, bzw. von diesen Monomeren angelöst werden. Eine derartige Anwendung ist beispielsweise die Herstellung von Prothesen, Kronen oder künstlichen Zähnen nach einem Pulver-Flüssigkeitsverfahren.

Durch die vorliegende Erfindung werden erstmals derartige unvernetzte Perlpolymerisate, welche homogen mit einem feinteiligen anorganischen Füllstoff gefüllt sind, zur Verfügung gestellt.

Gegenstand der Erfindung sind gleichmässig mit einem anorganischen Füllstoff gefüllte Perlpolymerisate mit einer mittleren Teilchengrösse von 5 bis 150 µm, welche erhältlich sind, indem man eine Mischung (I), enthaltend

(A) 10–60 Gew.-%, vorzugsweise 15–45 Gew.-% (bezogen auf gesamte Mischung) eines Füllstoffes auf Siliziumdioxidbasis,

(B) 40–90 Gew.-%, vorzugsweise 55–85 Gew.-% eines (Meth)acrylsäureesters, und gegebenenfalls

(C) 0–20 Gew.-% an weiteren Monomeren.

mit einem Polymerisationsinitiator aktiviert, in einer wässrigen Lösung (II) eines hochmolekularen organischen Dispergators dispergiert und die Dispersion durch Erhitzen über die Zerfallstemperatur des Initiators polymerisiert. Die erfindungsgemässen Perlpolymerisate sind dadurch gekennzeichnet, dass der Füllstoff (A) eine mittlere Teilchengrösse von 5 bis 100 nm aufweist und mit 1 bis 25 Gew.-% einer Silanverbindung als Haftvermittler (vorzugsweise einer Silanverbindung) behandelt ist und dass die Komponenten (B) und (C) im wesentlichen nur eine olefinische Gruppe aufweisende Verbindungen umfassen, so dass die Perlpolymerisate im wesentlichen unvernetzt sind und von (Meth)acrylsäureestern zumindest angelöst werden können. Das Molekulargewicht des Polymeren ($M_w$) liegt vorzugsweise im Bereich von $10^5$ bis $5.10^6$.

Als Füllstoff (A) ist erfindungsgemäss Siliziumdioxid besonders bevorzugt. Das Siliziumdioxid kann beispielsweise durch Fällung oder durch Flammhydrolyseverfahren hergestellt werden. Neben reinem Siliziumdioxid können auch Mischoxide des Siliziumdioxids, beispielsweise mit Aluminiumoxid, Boroxid, Titandioxid oder Zirkonoxid, eingesetzt werden, sofern der $SiO_2$-Anteil im Mischoxid höher als 50 Gew.-%, vorzugsweise höher als 75 Gew.-%, ist. Besonders gut geeignet ist flammhydrolytisch gewonnenes Siliziumdioxid mit einer mittleren Teilchengrösse (Primärteilchengrösse) von 10 bis 40 nm und einer BET-Oberfläche von 30 bis 300, vorzugsweise 40 bis 200 $m^2/g$.

Der Füllstoff auf Siliziumdioxidbasis wird vor seiner Verwendung zur Herstellung der erfindungsgemässen Perlen oberflächenbehandelt. Geeignete Oberflächenbehandlungsmittel sind in erster Linie die als Haftvermittler an sich bekannten Silanverbindungen, die beispielsweise in den US-PSen 30 66 113 und 35 39 533 beschrieben werden. Es können sowohl gesättigte Silanverbindungen, wie beispielsweise Hexamethyldisilazan oder γ-Glycidoxypropyltrimethoxysilan, als auch ungesättigte Silanverbindungen angewendet werden. Erfindungsgemäss werden bevorzugt polymerisierbare Silanverbindungen mit Vinyl- oder Vinylidengruppen eingesetzt.

Als ungesättigte polymerisierbare Silanverbindungen seien beispielhaft genannt: Vinyltriethoxysilan, Vinyltrimethoxysilan, γ-Methacryloxypropyltrimethoxysilan γ-Methacryloxypropyltris(2-methoxyethoxy)-silan und Vinyltriacetoxysilan.

Die Silanverbindung soll in Anteilen von 1 bis 25, vorzugsweise von 5 bis 20 Gew.-%, bezogen auf den Füllstoff auf Siliziumdioxidbasis, angewendet werden. Die Silanisierungsreaktion kann in einem inerten Lösungsmittel, beispielsweise in Methylenchlorid oder Toluol, durchgeführt werden, wobei der silanisierte Füllstoff durch Verdampfen des Lösungsmittels, beispielsweise in einem Sprühtrocknungsprozess, isoliert wird. Gemäss einer besonderen Ausführungsform der Erfindung erfolgt die Oberflächenbehandlung des Füllstoffes in Anwesenheit der Komponenten B sowie gegebenenfalls C.

Für die Herstellung der erfindungsgemässen Perlpolymerisate kommen beliebige an sich bekannte olefinisch ungesättigte Monomere der oben genannten Art in Betracht. Als Methacrylsäureester sind in erster Linie Alkylmethacrylate mit 1 bis 12 C-Atomen im Alkoholteil, wie z.B. Methylmethacrylat, Ethylmethacrylat, i-Butylmethacrylat, t-Butylmethacrylat, Cyclohexylmethacrylat, Furfurylmethacrylat, Tetrahydrofurfurylmethacrylat, Decylmethacrylat und Laurylmethacrylat brauchbar. Gut geeignet sind auch Mischungen verschiedener Methacrylsäureester, wobei ein Anteil von mehr als 50 Gew.-% Methylmethacrylat (bezogen auf die Summe der eingesetzten Monomeren) besonders vorteilhaft ist.

Neben den Methacrylsäureestern können zumindest anteilmässig (z.B. bis 50 Gew.-%) auch die entsprechenden Acrylsäureester eingesetzt werden.

Mit der Bezeichnung (Meth)acrylat sind im Rahmen der vorliegenden Erfindung sowohl das Methacrylat als auch das Acrylat gemeint. Zur Herstellung der erfindungsgemässen Perlpolymerisate werden vorzugsweise die Methacrylate eingesetzt.

Neben den (Meth)acrylaten können als Komponente C bis zu 20 Gew.-% (bezogen auf die Summe aus Füllstoff und den Monomeren) weitere einfach ungesättigte Vinyl- bzw. Vinyliden-Monomere, wie beispielsweise Styrol, α-Methylstyrol, Acrylnitril oder Vinylacetat eingesetzt werden.

Zur Herstellung der erfindungsgemässen Perlpolymerisate ist es nicht notwendig, besonders hochviskose Monomere einzusetzen. Die Viskosität der verwendeten Monomeren, das heisst die Viskosität der Mischung aus (B) und (C) liegt vorzugsweise im Bereich von 0,001 bis 0,09 Pa.s (1–90 Centipoise) bei der Dispergiertemperatur.

Die Mischung aus Füllstoff und den genannten Monomeren kann in üblichen Rührapparaturen hergestellt werden. Es sollen dabei vorzugsweise hohe Scherkräfte, zum Beispiel Rührenergien von 1 bis 10 Watt/l, angewendet werden.

Es ist, wie schon oben erwähnt, besonders günstig, die Oberflächenbehandlung des Füllstoffes im monomeren (Meth)acrylsäureester als Lösungsmittel durchzuführen. Auf diese Weise ist es nicht erforderlich, z.B. das silanbehandelte Siliziumdioxid zu isolieren und in einem weiteren Arbeitsschritt in monomerem (Meth)acrylsäureester zu dispergieren, sondern es wird auf direktem Wege eine Dispersion von oberflächenbehandeltem Füllstoff in (Meth)acrylsäureester erhalten, bei der der Füllstoff in homogener Verteilung vorliegt. Die erhaltene Füllstoffdispersion ist als Mischung (I) für die Perlpolymerisationsreaktion direkt einsetzbar.

Mischung (I) wird vorzugsweise vor der Polymerisation unter Rühren einer Vakuumbehandlung von 1,33 bis 40 000 Pa, vorzugsweise 133 bis 13 332 Pa unterzogen. Die Vakuumbehandlung, die mindestens einige Minuten, beispielsweise 10 Minuten, stattfinden soll, erfolgt vorzugsweise bei Raumtemperatur, doch können auch höhere oder niedrigere Temperaturen angewendet werden. Es ist dabei von Vorteil, wenn beim Evakuieren ein geringer Bruchteil der eingesetzten Monomeren (0.01 bis 5%) abdestilliert wird, da auf diese Weise Wasserspuren aus den Monomeren und von der Siliziumdioxidoberfläche entfernt werden können. Zweckmässigerweise wird die Füllstoff-Monomermischung mit Inertgas, zum Beispiel Stickstoff, belüftet.

Zur Aktivierung können übliche monomerlösliche Radikalbildner verwendet werden: beispielhaft seien genannt: Peroxid- und Azoverbindungen, wie Dibenzoylperoxid, Dilauroylperoxid, Cyclohexylpercarbonat und Azoisobuttersäuredinitril. Gut geeignet sind auch Mischungen von Polymerisationsinitiatoren mit unterschiedlichen Zerfallstemperaturen. Die Zugabe des Polymerisationsinitiators kann vor oder nach dem Evakuierungsschritt erfolgen. Um vorzeitiges Anpolymerisieren zu vermeiden, ist es jedoch zweckmässig, die Starter erst unmittelbar vor dem Dispergieren zuzusetzen.

Das aktivierte Siliziumdioxid-Monomer-Gemisch wird mittels einer wässrigen Polymerisatlösung dispergiert. Um möglichst gleichmässige und transparente Perlen zu erzeugen, ist es vorteilhaft, die Dispergatorlösung vorzulegen und das Füllstoff-Monomergemisch langsam unter Rühren zuzusetzen.

Das Verhältnis von Monomerphase zu Wasserphase beträgt in der Regel 1:1 bis 1:10, vorzugsweise 1:2 bis 1:5.

Als Dispergatoren sind alle zu diesem Zweck an sich bekannten wasserlöslichen makromolekularen Verbindungen, z.B. Cellulosederivate, wie Methylcellulose, und teilverseifte Polyvinylacetate geeignet. Gut geeignet sind auch Copolymerisate aus (Meth)acrylsäure und (Meth)acrylsäurealkylester. Besonders bevorzugt wird die alkalische Lösung eines Copolymerisates aus Methacrylsäure und Methylmethacrylat. Der Gehalt an Dispergator soll vorzugsweise 0,5 bis 5 Gew.-% bezogen auf die Wasserphase, betragen.

Die Polymerisation wird durch Erhitzen auf die Zerfallstemperatur des Polymerisationsinitiators eingeleitet. Die Reaktion soll so geführt werden, dass die Monomeren nicht zum Sieden kommen. Bei einsetzender exothermer Reaktion muss gegebenenfalls gekühlt werden. Es ist vorteilhaft, die Polymerisation unter erhöhtem Druck, beispielsweise unter 2 bis 6 bar Stickstoffdruck, durchzuführen.

Aus der auspolymerisierten Dispersion kann auf bekannte Weise durch Dekantieren, Filtrieren, Waschen und Trocknen das Perlpolymerisat gewonnen werden.

Die erfindungsgemässen Perlpolymerisate sind transparent und eignen sich zur Herstellung von Spritzgussartikeln mit verbesserten Eigenschaften.

Die Perlpolymerisate können darüber hinaus in vorteilhafter Weise als Füllstoff-Komponente von Dentalprodukten (neben monomeren (Meth) acrylaten sowie ggf. weiteren Monomeren als Bindemittel) eingesetzt werden. Sie eignen sich vor allem für solche Einsatzzwecke (wie z.B. die Herstellung von Prothesen, Kronen, Brücken und künstlichen Zähnen), bei denen üblicherweise bekannte ungefüllte Perlpolymerisate auf (Meth-)acrylatbasis eingesetzt werden.

Die mit den erfindungsgemässen Perlpolymerisaten hergestellten Werkstoffe zeichnen sich besonders durch erhöhte Abriebfestigkeit, grössere Härte und einen höheren Elastizitätsmodul aus.

Beispiel

Herstellung eines unvernetzten, mit mikrofeinem anorganischem Füllstoff homogen gefüllten Perlpolymerisates.

1.1. Silanisierungslösung

480 g γ-Methacryloxypropyltrimethoxysilan, 968 g entionisiertes Wasser und 144 g Methacrylsäure werden 30 Minuten bei Raumtemperatur vermischt, wobei eine homogene Lösung gebildet wird.

1.2 Gemisch aus mikrofeinem Füllstoff und Monomer

In einem 8-Liter-Rührreaktor werden die Silanisierungslösung 1.1 sowie 3240 g Methylmethacrylat und 360 g Isobutylmethacrylat vorgelegt. Unter Rühren mit hoher Drehzahl (ca. 400/UpM) werden 2400 g mikrofeines Siliziumdioxid (mittlere Teilchengrösse = 30 nm, BET-Oberfläche = 130 m²/g) portionsweise zugesetzt. Das Gemisch wird 12 h bei Raumtemperatur weiter gerührt, wobei die Viskosität der Mischung laufend erniedrigt wird. Anschliessend wird das Gemisch 5 Min. lang mit einem Vakuum von 2000 Pa behandelt und mit Stickstoff belüftet.

Das Gemisch 1.2 wird unmittelbar vor der Weiterverarbeitung mit 24 g Benzoylperoxid versetzt und durch Erhöhen des $N_2$-Druckes in den vorbereiteten 40-Liter-Reaktionsautoklaven gedrückt.

1.3. Perlpolymerisat

In einem 40-Liter-Autoklaven mit Ankerimpeller-Rührer werden unter Stickstoffspülung 12,6 kg dest. Wasser und 5,4 kg Dispergatorlösung (8,5% wässrige, NaOH-alkalische Lösung eines Copolymerisates aus gleichen Gewichtsteilen Methylmethacrylat und Methacrylsäure) vorgelegt und 5 Minuten gemischt. Bei laufendem Rührer (250 UpM) wird das oben beschriebene Monomergemisch innerhalb von 15 Minuten eingedrückt. Nach beendeter Zugabe wird 2 Stunden bei Raumtemperatur gerührt. Anschliessend wird 5 bar $N_2$ aufgedrückt und die Temperatur innerhalb von 15 Minuten auf 80 °C (innen) erhöht. Bei einsetzender exothermer Reaktion (ca. 30 Minuten nach Aufheizbeginn) wird so stark gekühlt, dass die Innentemperatur im Bereich von 80 bis 90 °C gehalten wird. Nach dem Abklingen der Reaktion wird 3 Stunden bei 80 °C nachgerührt. Das feste Perlpolymerisat wird nach dem Abkühlen durch Abdekantieren von feinteiligen Anteilen befreit, anschliessend filtriert, mehrfach mit destilliertem Wasser gewaschen und bei 80 °C getrocknet. Man erhält 6000 g transparente Perlen mit einem mittleren Teilchendurchmesser von 55 μm und einem $SiO_2$-Gehalt von 38%.

**Patentansprüche**

1. Gleichmässig mit einem anorganischen Füllstoff gefüllte Perlpolymerisate mit einer mittleren Teilchengrösse von 5 bis 150 μm, welche erhältlich sind, indem man eine Mischung (I), enthaltend

(A) 10–60 Gew.-% eines Füllstoffes auf Siliziumdioxidbasis,

(B) 40–90 Gew.-% eines (Meth)acrylsäureesters und gegebenenfalls

(C) 0–20 Gew.-% an weiteren Monomeren, mit einem Polymerisationsinitiator aktiviert, in einer wässrigen Lösung (II) eines hochmolekularen organischen Dispergators dispergiert und die Dispersion durch Erhitzen auf die Zerfallstemperatur des Initiators polymerisiert, dadurch gekennzeichnet, dass der Füllstoff (A) eine mittlere Teilchengrösse von 5 bis 100 nm aufweist und mit 1 bis 25 Gew.-% einer Silanverbindung als Haftvermittler behandelt ist und dass die Komponenten (B) und (C) im wesentlichen nur eine olefinische Gruppe aufweisende Verbindungen umfassen.

2. Perlpolymerisate nach Anspruch 1, dadurch gekennzeichnet, dass bei ihrer Herstellung die Mischung (I) vor der Polymerisation einer Vakuumbehandlung unterzogen wird.

3. Perlpolymerisate nach Anspruch 1 oder 2, dadurch gekennzeichnet, dass zu ihrer Herstellung die Mischung (I) in der Lösung (II) dispergiert wird, indem man die Lösung (II) vorlegt und Mischung (I) langsam unter Rühren zufügt.

4. Perlpolymerisate nach Anspruch 1 bis 3, dadurch gekennzeichnet, dass die Viskosität der Mischung aus (B) und (C) 0,001 bis 0,09 Pa.s beträgt.

5. Perlpolymerisate nach Anspruch 1 bis 4, dadurch gekennzeichnet, dass Lösung (II) eine alkalische Lösung eines Methacrylsäure/Methacrylsäuremethylester-Copolymerisates ist.

6. Perlpolymerisate nach Anspruch 1 bis 5, dadurch gekennzeichnet, dass der Füllstoff (A) mit einer Vinyliden- oder Vinylgruppen aufweisenden Silanverbindung behandelt ist.

7. Perlpolymerisate nach Anspruch 1 bis 6, dadurch gekennzeichnet, dass bei ihrer Herstellung die Behandlung von Komponente (A) mit dem Haftvermittler in Anwesenheit der Komponente (B) und gegebenenfalls (C) erfolgt.

8. Verfahren zur Herstellung von gleichmässig mit einem anorganischen Füllstoff gefüllten Perlpolymerisaten mit einer mittleren Teilchengrösse von 5 bis 150 μm, indem man eine Mischung (I), enthaltend

(A) 10–60 Gew.-% eines Füllstoffes auf Siliziumdioxidbasis,

(B) 40–90 Gew.-% eines (Meth)acrylsäureesters und gegebenenfalls

(C) 0–20 Gew.-% an weiteren Monomeren, mit einem Polymerisationsinitiator aktiviert, in einer wässrigen Lösung (II) eines hochmolekularen organischen Dispergators dispergiert und die Dispersion durch Erhitzen auf die Zerfallstemperatur des Initiators polymerisiert, dadurch gekennzeichnet, dass der Füllstoff (A) eine mittlere Teilchengrösse von 5 bis 100 nm aufweist und mit 1 bis 25 Gew.-% einer Silanverbindung als Haftvermittler behandelt ist, und dass die Komponenten (B) und (C) im wesentlichen nur eine olefinische Gruppe aufweisende Verbindungen umfassen.

9. Verfahren nach Anspruch 8, dadurch gekennzeichnet, dass Komponente (A) in Anwesenheit der Komponente (B) und gegebenenfalls (C) mit dem Haftvermittler behandelt wird.

10. Verfahren nach Anspruch 8 oder 9, dadurch gekennzeichnet, dass die Mischung (I) vor der Dispergierung einer Vakuumbehandlung unterzogen wird, und danach dispergiert wird, indem man Lösung (II) vorlegt und Mischung (I) langsam unter Rühren zufügt.

**Revendications**

1. Produits de polymérisation en suspension uniformément additionnés d'une charge inorganique de dimension moyenne des particules de 5 à 150 μm, qui peuvent être obtenus par activation d'un mélange (I) contenant,

(A) 10 à 60% en poids d'une charge à base de dioxyde de silicium,

(B) 40 à 90% en poids d'un ester d'acide (méth)acrylique et, le cas échéant,

(C) 0 à 20% en poids d'autres monomères, avec un initiateur de polymérisation, dispersion dans une solution aqueuse (II) d'un agent dispersant organique de haut poids moléculaire et polymérisation de la dispersion par chauffage jusqu'à la température de décomposition de l'initiateur, caractérisé en ce que la charge (A) présente une dimension moyenne des particules de 5 à 100 nm et est traitée avec 1 à 25% en poids d'un composé du type silane comme agent d'adhésivité, et en ce que les composants (B) et (C) comprennent essentiellement des composés ne présentant qu'un groupe oléfinique.

2. Produits de polymérisation en suspension suivant la revendication 1, caractérisés en ce que lors de leur préparation, le mélange (I) est soumis à un traitement sous vide avant la polymérisation.

3. Produits de polymérisation en suspension suivant la revendication 1 ou 2, caractérisés en ce que pour leur obtention, le mélange (I) est dispersé dans la solution (II) par lente addition sous agitation du mélange (I) dans la solution (II) préalablement introduite.

4. Produits de polymérisation en suspension suivant les revendications 1 à 3, caractérisés en ce que la viscosité du mélange de (B) et (C) a une valeur de 0,001 à 0,09 Pa.s.

5. Produits de polymérisation en suspension suivant les revendications 1 à 4, caractérisés en ce que la solution (II) est une solution alcaline d'un produit de copolymérisation d'acide méthacrylique et d'ester méthylique d'acide méthacrylique.

6. Produits de polymérisation en suspension suivant les revendications 1 à 5, caractérisés en ce que la charge (A) est traitée avec un composé du type silane présentant des groupes vinylidène ou vinyle.

7. Produits de polymérisation en suspension suivant les revendications 1 à 6, caractérisés en ce que lors de leur préparation, le traitement du composant (A) avec l'agent d'adhésivité est effectué en présence du composant (B) et le cas échéant du composant (C).

8. Procédé de production de polymères en suspension uniformément additionnés d'une charge inorganique ayant une dimension moyenne des particules de 5 à 150 μm, par activation d'un mélange (I) contenant

(A) 10 à 60% en poids d'une charge à base de dioxyde de silicium,

(B) 40 à 90% en poids d'un ester d'acide (méth)acrylique et, le cas échéant,

(C) 0 à 20% en poids d'un autre monomère, avec un activateur de polymérisation, dispersion dans une solution aqueuse (II) d'un dispersant organique de haut poids moléculaire et polymérisation de la dispersion par chauffage à la température de décomposition de l'initiateur, caractérisé en ce que la charge (A) présente une dimension moyenne des particules de 5 à 100 nm et est traitée avec 1 à 25% en poids d'un composé du type silane comme agent d'adhésivité, et en ce que les composants (B) et (C) comprennent essentiellement des composés portant un seul groupe oléfinique.

9. Procédé suivant la revendication 8, caractérisé en ce que le composant (A) est traité en présence du composant (B) et le cas échéant du composant (C) avec un agent d'adhésivité.

10. Procédé suivant la revendication 8 ou 9, caractérisé en ce que le mélange (I) est soumis avant la dispersion à un traitement sous vide puis dispersé, par lente addition sous agitation du mélange (I) à la solution (II) préalablement introduite.

**Claims**

1. Bead polymers which are uniformly filled with an inorganic filler and have a mean particle size of 5 to 150 μm and which can be obtained by activating a mixture (I), containing

(A) 10–60% by weight of a filler based on silicon dioxide,

(B) 40–90% by weight of a (meth)acrylic ester and, where appropriate,

(C) 0–20% by weight of other monomers, with a polymerisation initiator, dispersing it in an aqueous solution (II) of a high molecular weight organic dispersing agent, and polymerising the dispersion by heating it to the decomposition temperature of the initiator, characterised in that the filler (A) has a mean particle size of 5 to 100 nm and is treated with 1 to 25% by weight of a silane compound as the adhesion promoter, and in that the components (B) and (C) essentially comprise compounds having only one olefinic group.

2. Bead polymers according to Claim 1, characterised in that, in their preparation, the mixture (I) is subjected to vacuum treatment before polymerisation.

3. Bead polymers according to Claim 1 or 2, characterised in that, for their preparation, the mixture (I) is dispersed in the solution (II) by initially introducing the solution (II) and slowly adding mixture (I), with stirring.

4. Bead polymers according to Claim 1 to 3, characterised in that the viscosity of the mixture of (B) and (C) is 0.001 to 0.09 Pa.s.

5. Bead polymers according to Claim 1 to 4, characterised in that solution (II) is an alkaline solution of a methacrylic acid/methyl methacrylate copolymer.

6. Bead polymers according to Claim 1 to 5, characterised in that the filler (A) is treated with a silane compound having vinylidene or vinyl groups.

7. Bead polymers according to Claim 1 to 6, characterised in that, in their preparation, the treatment of component (A) with the adhesion promoter takes place in the presence of component (B) and, where appropriate, (C).

8. Process for the preparation of bead polymers which are uniformly filled with an inorganic filler and have a mean particle size of 5 to 150 µm by activating a mixture (I), containing

(A) 10–60% by weight of a filler based on silicon dioxide,

(B) 40–90% by weight of a (meth)acrylic ester and, where appropriate,

(C) 0–20% by weight of other monomers, with a polymerisation initiator, dispersing it in an aqueous solution (II) of a high molecular weight organic dispersing agent, and polymerising the dispersion by heating it to the decomposition temperature of the initiator, characterised in that the filler (A) has a mean particle size of 5 to 100 nm and is treated with 1 to 25% by weight of a silane compound as the adhesion promoter, and in that the components (B) and (C) essentially comprise compounds having only one olefinic group.

9. Process according to Claim 8, characterised in that component (A) is treated with the adhesion promoter in the presence of component (B), and, where appropriate, (C).

10. Process according to Claim 8 or 9, characterised in that, before dispersing, the mixture (I) is subjected to vacuum treatment and is thereafter dispersed by initially introducing solution (II) and slowly adding mixture (I), with stirring.